(19) Europäisches Patentamt
European Patent Office
Office européen des brevets

(11) Publication number : 0 433 693 B1

(12) # EUROPEAN PATENT SPECIFICATION

(45) Date of publication of patent specification : **02.02.94 Bulletin 94/05**

(51) Int. Cl.$^5$ : **C09B 67/10,** C09B 67/22, C09B 29/42

(21) Application number : **90122341.2**

(22) Date of filing : **22.11.90**

(54) **Water-insoluble monoazo dyes and mixture thereof.**

(30) Priority : **22.11.89 JP 303609/89**
**22.11.89 JP 303610/89**

(43) Date of publication of application : **26.06.91 Bulletin 91/26**

(45) Publication of the grant of the patent : **02.02.94 Bulletin 94/05**

(84) Designated Contracting States : **CH DE LI**

(56) References cited :
**EP-A- 0 022 981**
**EP-A- 0 187 916**
**EP-A- 0 228 092**
**DE-A- 2 211 663**
**DE-A- 2 525 505**

(73) Proprietor : **HOECHST MITSUBISHI KASEI CO., LTD.**
**10-33, Akasaka 4-chome**
**Minato-ku, Tokyo (JP)**

(72) Inventor : **Himeno, Kiyoshi**
**23-4, Hinosato 9-chome**
**Munakata-shi, Fukuoka-ken (JP)**
Inventor : **Sekioka, Riyouichi**
**4-15, Hanao 4-chome**
**Kitakyushu-shi, Fukuoka-ken (JP)**

(74) Representative : **Wächtershäuser, Günter, Dr.**
**Tal 29**
**D-80331 München (DE)**



Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to monoazo dyes and a mixture thereof. More particularly, it relates to red color monoazo dyes having novel crystal transformations and a mixture thereof, which are capable of uniformly dyeing polyester fibers, etc. even under severe dyeing conditions at a high temperature.

In the dye industry, there have been various rationalizations for dyeing methods. For example, as a method for dyeing polyester fibers by means of a disperse dye, a liquid flow dyeing method has been available for cloth, and a cheeze dying method or package dyeing method has been widely employed for yarns.

These dyeing methods are of a system wherein a dye dispersion is forcibly circulated into dense layers formed by winding stationary fibers into a plurality of layers. Accordingly, the dye particles dispersed in the dye bath are required to be finer than ever and the dispersion stability of the dye particles in the dye bath is required to be excellent. If the dye particles are coarse, a filtration phenomenon by the fiber layers against such dye particles will take place, and there will be various problems including poor penetration of the dye into the interior of the fibers, or uneven dyeing of the inner layers and outer layers due to adhesion of agglomerates, or a deterioration in fastness such as fastness to rubbing, due to the adhesion of the dye only on the fiber surface.

Accordingly, the dye to be used for such dyeing methods is required to have good dispersibility in the dye bath, and it is further required that the dispersibility will not deteriorate within a wide temperature range from room temperature to a high temperature where the actual dyeing takes place.

However, generally, the dispersibility of the dye is likely to deteriorate when the dye bath is brought to a high temperature. As a result, an agglomerated dye is likely to deposit as a filtration residue on the substance to be dyed, as mentioned above. In the case where the substance to be dyed is multi-layered, the dyeing density tends to be different between the outer layers and the inner layers, and it tends to be difficult to obtain a dyed product having a uniform dye density.

With a view to saving resources and energy, there is a recent trend for dyeing under severer conditions, as follows:

(1) a low bath ratio of the dye bath (the ratio of the substance to be dyed to the dyeing solution is reduced from 1:30 to 1:10),

(2) a low proportion of a dispersing agent (the ratio of the dye cake to the dispersing agent is reduced from 1:3 to 1:1), and

(3) dyeing conducted for a shorter period of time at a higher temperature (a change from 130°C for one hour to 135°C for 0.5 hour).

These conditions all adversely affect the dispersion stability of the dye. Therefore, even the dyes which are relatively good dispersion stability by the conventional dyeing methods, tend to have poor dispersion stability by the recent dyeing methods which are conducted under severer conditions than ever.

For example, a pyridine type monoazo dye of the following formula (I):

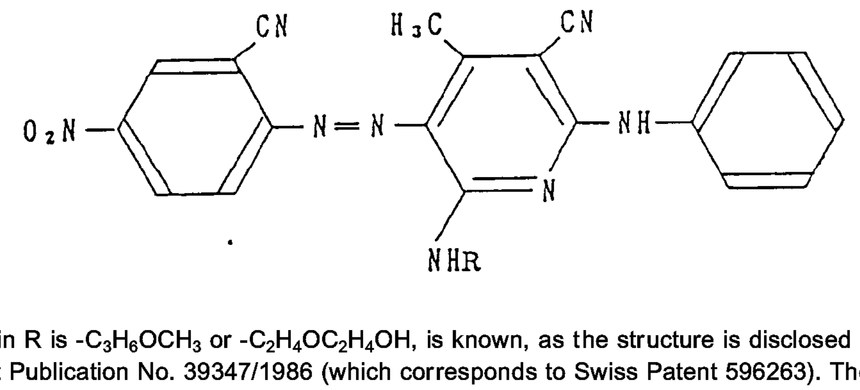

(I)

wherein R is $-C_3H_6OCH_3$ or $-C_2H_4OC_2H_4OH$, is known, as the structure is disclosed in Japanese Examined Patent Publication No. 39347/1986 (which corresponds to Swiss Patent 596263). The monoazo dye can be prepared by coupling a diazo component with a coupling component in accordance with a usual method. Such monoazo dye is capable of uniformly dyeing polyester fibers under conventional mild dyeing conditions and presents excellent fastness. However, when dyeing is conducted under the above mentioned severe condition at a high temperature, the dispersibility of the dye remarkably deteriorates, and it becomes difficult to obtain a dyed product having a uniform color density.

Further, such dye also has a problem with respect to the compatibility with various dyeing assistants. For example, its dispersion stability at a high temperature in the presence of Glauber's salt ($Na_2SO_4$) is poor. Accordingly, non-uniform dyeing will occur when a polyester/cotton mixed product is dyed with such dye in combination with e.g. a reactive dye in the presence of Glauber's salt. Further, when it is to be used in combination with other dye, the compatibility with the other dye tends to be poor, and color drift or uneven dyeing tends to occur.

It is an object of the present invention to solve the above problems and to provide a dye capable of excellently dyeing polyester fibers, etc. under severe conditions at a high temperature.

The present inventors have conducted extensive researches with respect to the above drawback and as a result, have found that the pyridine type monoazo compound of the formula (I) has at least two kinds of crystal transformations in each of the case where R is $-C_3H_6OCH_3$ and the case where R is $-C_2H_4OC_2H_4OH$, that one of them is a crystal transformation which presents a not so good dispersion stability under a high temperature dyeing condition, that the cake obtained by a usual synthetic reaction has such crystal transformation, and that the other one is a novel crystal transformation with excellent dispersion stability at a high temperature and even under severe conditions. Further, it has been found that the dispersion stability of the dye composition in a high temperature dyeing bath depends not only on the size of the dye particles but very much on the crystal transformation, and thus when the above mentioned compound having a novel crystal transformation is employed, it is possible for the first time to accomplish the dispersion stability of the dye composition in a high temperature dye bath. The present invention has been accomplished on the basis of these discoveries.

Thus, the present invention provides a water-insoluble monoazo dye of the formula:

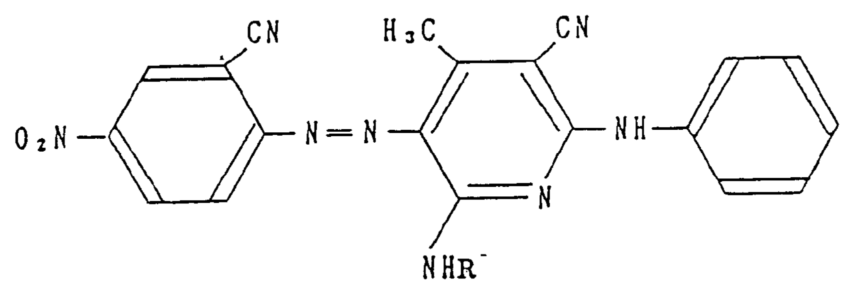

(I)

wherein R is $-C_3H_6OCH_3$ or $-C_2H_4OC_2H_4OH$, whereby (1) when R is $-C_3H_6OCH_3$, the dye has a crystal transformation characterized by an X-ray diffraction pattern (CuKα) showing the strongest peak at an angle of diffraction (2θ) of about 6.6° and three weak peaks at about 11.4°, 31.6° and 33.8°, and (2) when R is $-C_2H_4OC_2H_4OH$, the dye has a crystal transformation characterized by an X-ray diffraction pattern (CuKα) showing three strong peaks at angles of diffraction (2θ) of about 6.2°, 14.5° and 25.2° and two intermediate peaks at about 18.2° and 19.4°.

The present invention also provides a mixture of such water-insoluble monoazo dyes of the formula (I).

Now, the present invention will be described in detail with reference to the preferred embodiments.

In the accompanying drawings:

Figure 1 is an X-ray diffraction pattern of the α-type crystal transformation of the monoazo compound obtained in Example 1.

Figure 2 is an X-ray diffraction pattern of the β-type crystal transformation of the monoazo compound obtained in Example 1.

Figure 3 is an X-ray diffraction pattern of the α-type crystal transformation of the monoazo compound obtained in Example 2 of the present invention.

Figure 4 is an X-ray diffraction pattern of the β-crystal transformation of the monoazo compound obtained in Example 2.

In these Figures, the abscissa represents the angle of diffraction (2θ), and the ordinate represents the diffraction intensity.

The monoazo compounds having the novel crystal transformations of the present invention (hereinafter referred to as α-type crystal transformations) can be obtained as follows. For example, the monoazo compounds of the formula (I) can be prepared by diazodizing a compound of the following formula (II):

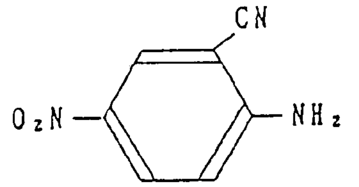

(II)

under a usual method and then subjecting this to a coupling reaction with a coupler of the following formula (III):

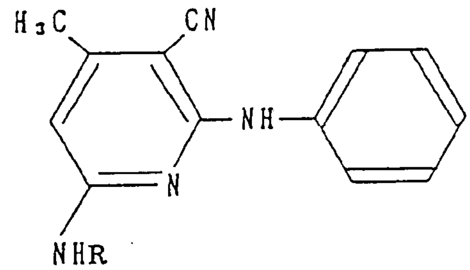

(III)

wherein R is as defined above, in an aqueous medium at a temperature of from -5 to 15°C, preferably from -5 to 5°C, for from 0.5 to 10 hours. The cakes of the monoazo compounds thereby obtained have substantially amorphous crystal transformations (hereinafter referred to as β-crystal transformations). In the present invention, such cakes are further treated under certain specific conditions to obtain α-type crystal transformations. As such a treating method, it is common to employ a method wherein the cake of the β-crystal transformation is dispersed in an aqueous medium and subjected to stirring treatment at a temperature of from 60 to 130°C, preferably from 80 to 100°C, for from 0.5 to 30 hours, preferably from 1 to 10 hours, if necessary in the presence of a dispersant such as a condensation product of naphthalenesulfonic acid with formaldehyde or a concentrated product of a sulfide pulp waste liquor composed mainly of sodium lignin sulfonate, or a method in which the cake of the β-crystal transformation is dispersed in an organic solvent, for example, an alcohol such as methanol, ethanol or butanol; an ether such as dioxane; ethylene glycol or glycol ether and then subjected to stirring treatment at a temperature of from 15 to 100°C, preferably from 20 to 80°C, for 0.5 to 10 hours.

Now, the α-type crystal transformations and the β-type crystal transformations of the two types of the monoazo compounds of the formula (I) will be described, respectively, with reference to the drawings. Figures 1 to 4 show X-ray diffraction patterns wherein the states of diffraction by means of CuKα-rays in the powder X-ray diffraction method were recorded using a proportional counter. The abscissa represents the angle of diffraction (2θ), and the ordinate represents the intensity of diffraction. Figure 1 shows the α-type crystal transformation as a novel crystal form of the present invention with the compound of the formula (I) where R is $-C_3H_6OCH_3$ and is particularly characterized by the strongest peak at an angle of diffraction (2θ) of about 6.6° and three weak peaks at about 11.4°, 31.6° and 33.8°. Figure 2 shows the conventional β-type crystal transformation of the compoud of the formula (I) where R is $-C_3H_6OCH_3$, and the crystal transformation is clearly different from the α-type crystal transformation of Figure 1, although the structure is the same.

Figure 3 shows the α-type crystal transformation as a novel crystal form of the present invention with the compound of the formula (I) where R is $-C_2H_4OC_2H_4OH$ and is particularly characterized by three strong peaks at angles of diffraction (2θ) of about 6.2°, 14.5° and 25.2° and two intermediate peaks at about 18.2° and 19.4°. Figure 4 shows the conventional β-type crystal transformation of the compound of the formula (I) where R is $-C_2H_4OC_2H_4OH$, and the crystal transformation is clearly different from the α-type crystal transformation of Figure 3, although the structure is the same.

The angle of diffraction by an X-ray diffraction method with the same crystal structure always agrees with an allowable error of about ±0.1°. Therefore, these Figures clearly indicate the differences of the crystal transformation. Due to the difference in the crystal form, the behavior of the monoazo compound during the dyeing differs. In the present invention where a monoazo compound having an α-type crystal transformation is employed, excellent dyeing can be conducted even when a dyeing method involving severe conditions is employed. Each of monoazo dyes of the present invention of the formula (I) having the α-type crystal transformations exhibits excellent dyeing properties as compared with the monozao dyes of conventional crystal transformations. However, the dyes having the respective α-type crystal transformations may be used in combination as a mixture. Such a combination is preferred, since the temperature dependency during the dyeing operation is thereby improved. In the case where the dyes having the respective α-type crystal transformations are to be used in combination, the blending ratio is usually such that the ratio of the monoazo dye of the formula (I) where R is $-C_3H_6OCH_3$ to the monoazo dye of the formula (I) where R is $-C_2H_4OC_2H_4OH$ is from 8:2 to 2:8 by weight ratio.

As the fibers to be dyed by the monoazo dyes of the present invention or by the mixture thereof, there may be mentioned polyester fibers made of polyethylene terephthalate, a polycondensation product of terephthalic acid and 1,4-bis-(hydroxymethyl)cyclohexane, etc. or a mixed product of the above polyester fibers with natural fibers such as cotton or wool, or a mixed fabric, may be mentioned. To dye polyester fibers by means of the monoazo dyes of the present invention or a mixture thereof, a dye bath or a printing paste having the monoazo dye of the present invention or a mixture of such dyes dispersed in an aqueous medium is prepared by using a condensation product of naphthalene sulfonic acid with formaldehyde, sulfuric acid ester of a higher alcohol or a higher alkyl benzene sulfonate as a dispersing agent in accordance with a usual method, and dyeing can be conducted by dip dyeing or printing. Further, for example, in the case of dip dyeing, dyeing treatment methods such as the above mentioned high temperature dyeing method, a carrier dyeing method or a thermosol dyeing method may be employed. The monoazo dyes of the present invention have excellent dispersion stability, and even if severe dyeing conditions are adopted in such dyeing methods, polyester fibers or their mixed products can be satisfactorily dyed. Specifically, polyester fibers may be subjected to exhaustion dyeing in an aqueous medium in the presence of a dispersing agent under such severe conditions that the dyeing temperature is from 120 to 140°C, the bath ratio is at most 15 times and the proportion of the dispersing agent to the dye is at most three times by weight.

In some cases, even better results can be obtained by adding an acidic substance such as formic acid, acetic acid, phosphoric acid or ammonium sulfate to the dye bath.

Further, the monoazo dyes of the formula (I) to be used by the method of the present invention or a mixture of such dyes, may be used in combination with other dyes. In some cases, good results such as an improvement of the dyeing properties can be obtained by the mutual blending of dyes.

The water-insoluble monozao dyes having specific crystal transformations of the present invention present excellent dispersion stability even at a high temperature and under such severe dyeing conditions as the ratio of the substance to be dyed to the dyeing solution being e.g. 1:10, the proportion of the dye cake to the dispersing agent is 1:1 and the dyeing is conducted at 135°C for 0.5 hour, and the dyed cloth thereby obtained is excellent in the fastness to light or the fastness to rubbing. Thus, the dyes of the present invention are very useful from the view point of saving resources and energy.

Now, the present invention will be described in further detail with reference to Examples. However, it should be understood that the present invention is by no means restricted to such specific Examples.

EXAMPLE 1 (Preparation of dye crystals)

3.0 g of 2-anilino-3-cyano-4-methyl-6-(γ-methoxypropylamino)-pyridine was dissolved in 300 mℓ of 15% of sulfuric acid at a temperature of from 0 to 3°C to obtain a coupling component solution.

Then, 1.6 g of 2-cyano-4-nitroaniline was added to a mixture comprising 3.3 g of 43% nitrosylsulfuric acid and 5 g of 80% sulfuric acid at a temperature of from 0 to 3°C, and diazotization was conducted to obtain a diazotized solution. This diazotized solution was dropwise added to the above coupling component solution at a temperature of from 0 to 5°C. Then, the pH was adjusted to 4.5 with sodium acetate, and the mixture was stirred at the same temperature for 1 hour. Precipitated crystals were collected by filtration, washed with water and then dried to obtain 4.5 g of red crystals of the compound of the formula (I) where R is $-C_3H_6OH_3$. The powder of the monoazo dye obtained by this reaction was analyzed by an X-ray diffraction method, whereby it was found to have a β-type crystal transformation showing the X-ray diffraction pattern of Figure 2.

Then, the β-type crystals obtained were dispersed in water in a volume of 10 times and stirred at a temperature of from 90 to 95°C for 3 hours for the transformation of crystals. After the transformation of crystals, filtration and drying were conducted, and the crystals thereby obtained were analyzed by an X-ray diffraction method, whereby they were found to have an α-type crystal transformation showing the X-ray diffraction pattern of Figure 1.

TEST EXAMPLE 1 (Dyeing test)

0.2 g of the monoazo compound having an α-type crystal transformation obtained in Example 1 was dispersed in 1ℓ of water containing 0.2 g of a condensation product of naphthalenesulfonic acid and formaldehyde and 0.2 g of a sulfuric acid ester of a higher alcohol, to obtain a dye bath.

To this dye bath, 100 g of polyester fibers were immersed and dyed at 135°C for 30 minutes, followed by soaping, washing with water and drying, whereby the dispersibility of the dye was excellent, and uniform dyeing to the cloth was attained. The dyed cloth was bluish red, and the fastness to light was 6 grade, and fastness to rubbing was as excellent as 5 grade.

COMPARATIVE TEST EXAMPLE 1 (Dyeing test)

The dyeing test was conducted in the same manner as in Test Example 1 except that the monoazo compound having a β-crystal transformation obtained in the course of the production in Example 1 was employed, whereby partial agglomeration of the dye took place in the dye bath, and the cloth was non-uniformly dyed, and fastness to rubbing was substantially inferior at a level of 1 grade.

TEST EXAMPLE 2 (Dyeing test)

Dyeing by a slightly mild dyeing method was conducted in the same manner as in Test Example 1 except that in Test Example 1, the condensation product of naphthalenesulfonic acid and formaldehyde and the sulfuric acid ester of a higher alcohol were used three times i.e. in an amount of 0.6 g, respectively, and the dyeing condition was changed to 130°C for 60 minutes. As a result, with the α-type crystal transformation of the present invention, such excellent dyeing was attained as in Test Example 1, and the dyed cloth was excellent with the fastness to light being 6 grade and the fastness to rubbing being 5 grade.

COMPARATIVE TEST 2 (Dyeing test)

Dyeing was conducted by a slightly mild dyeing method in the same manner as in Test Example 2 except that the monoazo compound having a β-type crystal transformation obtained in the course of the production in Example 1, was used. As a result, a slight improvement in the dyeing properties was observed as compared with Comparative Test Example 1, but the cloth was non-uniformly dyed, and the fastness to rubbing was inferior at level of 3 grade.

EXAMPLE 2 (Preparation of dye crystals)

3.2 g of 2-anilino-3-cyano-4-methyl-6-hydroxyethoxyethylaminopyridine was dissolved in 300 mℓ of a 15% sulfuric acid aqueous solution at a temperature of from 0 to 3°C to obtain a coupling component solution.

1.6 g of 2-cyano-4-nitroaniline was added at a temperature of from 0 to 3°C to a mixture comprising 3.3 g of 43% nitrosylsulfuric acid and 5 g of 80% sulfuric acid for diazotization to obtain a diazotized solution. This diazotized solution was dropwise added at a temperature of from 0 to 5°C to the above coupling component solution. Then, the pH was adjusted to 4.5 with sodium acetate, and the mixture was stirred at the same temperature for 1 hour. Precipitated crystals were collected by filtration, washed with water and dried to obtain 4.5 g of red crystals of the compound of the formula (I) wherein R is $-C_2H_4OC_2H_4OH$.

The powder of the monoazo dye obtained by this reaction was analyzed by an X-ray diffraction method, whereby it was found to have a β-type crystal transformation showing the X-ray diffraction pattern of Figure 4.

Then, the obtained β-type crystals were dispersed in water in an amount of 10 times by volume, and transformation of the crystals was conducted at a temperature of from 90 to 95°C for 3 hours. After transformation of the crystals, filtration and drying were conducted, and the obtained crystals were analyzed by an X-ray diffraction method, whereby they were found to have an α-type crystal transformation showing the X-ray diffraction pattern of Figure 2.

TEST EXAMPLE 3 (Dyeing test)

0.2 g of the monoazo compound having an α-type crystal transformation obtained in Example 2 was dispersed in 1 ℓ of water containing 0.2 g of a condensation product of naphthalenesulfonic acid and formaldehyde and 0.2 g of a sulfuric acid ester of a higher alcohol, to obtain a dye bath. To this dye bath, 100 g of polyester fibers were immersed and dyed at 135°C for 30 minutes, followed by soaping, washing with water and drying, whereby the dispersibility of the dye was excellent, and uniform dyeing to cloth was attained. The dyed cloth was bluish red and was excellent with the fastness to light being 6 grade and the fastness to rubbing was 5 grade.

COMPARATIVE TEST EXAMPLE 3 (Dyeing test)

The dyeing test was conducted in the same manner as in Test Example 1 except that the monoazo compound having a β-type crystal transformation obtained in the course of the production in Example 2 was employed, whereby partial agglomeration of the dye took place in the dye bath, and the cloth was non-uniformly dyed, and the fastness to rubbing was substantially inferior at a level of 1 grade.

TEST EXAMPLE 4 (Dyeing test)

Dyeing was conducted by a slightly mild dyeing method in the same manner as in Test Example 3 except that the condensation product of naphthalenesulfonic acid and formaldehyde and the sulfuric acid of a higher alcohol were used three times i.e. in an amount of 0.6 g, respectively, and the dyeing condition was changed to 130°C for 60 minutes. As a result, with the α-type crystal transformation of the present invention, such excellent dyeing was attained as in Test Example 3, and the dyed cloth was excellent with the fastness to light being 6 grade, and the fastness to rubbing was 5 grade.

COMPARATIVE TEST EXAMPLE 4 (Dyeing test)

Dyeing was conducted by a slightly mild dyeing method in the same manner as in Test Example 4 except that the monoazo compound having a β-type crystal transformation obtained in the course of the production in Example 2 was used. As a result, a slight improvement in the dyeing properties was observed as compared with Comparative Test Example 3, but the cloth was non-uniformly dyed, and the fastness to rubbing was inferior at a level of 3 grade.

TEST EXAMPLE 5

Using the respective dyes having α-type transformations of Examples 1 and 2 alone or in combination as a mixture as identified in Table 1, dyeing was conducted in the same manner as in Test Example 2 at a dyeing temperature of 130°C or 120°C. On the basis of the color densities of the respective dyed products, the temperature dependency was obtained in accordance with the following formula. The results are shown in Table 1.

$$\text{Temperature dependency} = \frac{\text{The color density of the dyed product the when dyed at 120°C}}{\text{The color density of the dyed product when dyed at 130°C}} \times 100$$

Table 1

| No. | Dye used | Temperature dependency |
|---|---|---|
| 5-1 | Dye of Example 1 | 60 |
| 5-2 | Dye of Example 2 | 50 |
| 5-3 | Mixture of dyes of Examples 1 and 2 (The weight ratio of the dye of Example 2 to the dye of Example 1 is 2/3) | 85 |

**Claims**

1. A water-insoluble monoazo dye of the formula:

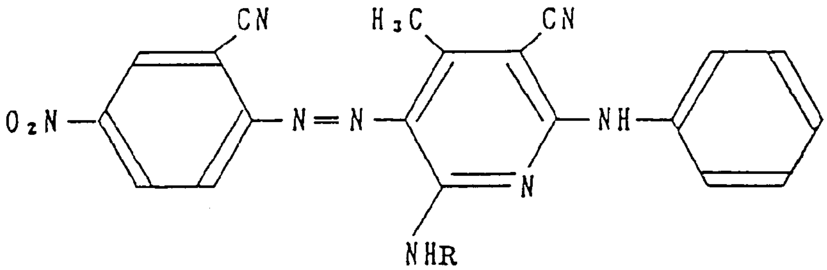

(I)

wherein R is $-C_3H_6OCH_3$ or $-C_2H_4OC_2H_4OH$, whereby (1) when R is $-C_3H_6OCH_3$, the dye has a crystal transformation characterized by an X-ray diffraction pattern (CuKα) showing the strongest peak at an angle of diffraction (2θ) of about 6.6° and three weak peaks at about 11.4°, 31.6° and 33.8°, and (2) when R is $-C_2H_4OC_2H_4OH$, the dye has a crystal transformation characterized by an X-ray diffraction pattern (CuKα) showing three strong peaks at angles of diffraction (2θ) of about 6.2°, 14.5° and 25.2° and two intermediate peaks at about 18.2° and 19.4°.

2. The water-insoluble monoazo dye according to Claim 1, wherein R is $-C_3H_6OCH_3$.

3. The water-insoluble monoazo dye according to claim 1, wherein R is $-C_2H_4OC_2H_4OH$.

4. A mixture of water-insoluble monoazo dyes of the formula:

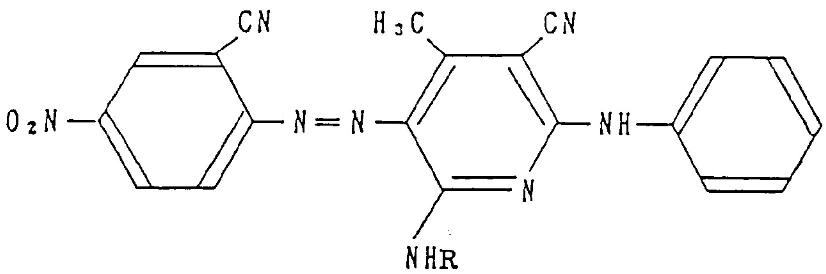

(I)

wherein R is $-C_3H_6OCH_3$ or $-C_2H_4OC_2H_4OH$, whereby (1) when R is $-C_3H_6OCH_3$, the dye has a crystal transformation characterized by an X-ray diffraction pattern (CuKα) showing the strongest peak at an angle of diffraction (2θ) of about 6.6° and three weak peaks at about 11.4°, 31.6° and 33.8°, (2) when R is $-C_2H_4OC_2H_4OH$, the dye has a crystal transformation characterized by an X-ray diffraction pattern (CuKα) showing three strong peaks at angles of diffraction (2θ) of about 6.2°, 14.5° and 25.2° and two intermediate peaks at about 18.2° and 19.4°, and (3) the blending ratio of the monoazo dye of the formula (I) wherein R is $-C_3H_6OCH_3$ to the monoazo dye of the formula (I) wherein R is $-C_2H_4OC_2H_4OH$ is from 8:2 to 2:8 by weight ratio.

## Patentansprüche

1. Wasserunlöslicher Monoazofarbstoff der Formel:

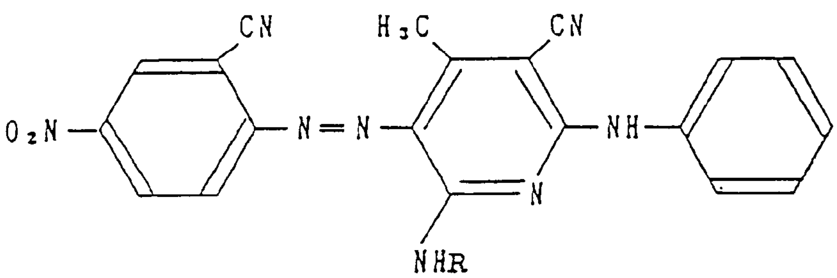

(I)

worin R $-C_3H_6OCH_3$ oder $-C_2H_4OC_2H_4OH$ ist, wobei

(1) wenn R $-C_3H_6OCH_3$ ist, der Farbstoff eine Kristallform hat, die charakterisiert ist durch ein Röntgenbeugungsmuster (CuKα), das den stärksten Peak bei einem Beugungswinkel (2θ) von etwa 6,6° und drei schwache Peaks bei etwa 11,4°, 31,6° und 33,8° zeigt und

(2) wenn R $-C_2H_4OC_2H_4OH$ ist, der Farbstoff eine Kristallform aufweist, die charakterisiert ist durch ein Röntgenbeugungsmuster (CuKα), das drei starke Peaks bei Beugungswinkeln (2θ) von etwa 6,2°, 14,5° und 25,2° sowie zwei mittlere Peaks bei etwa 18,2° und 19,4° zeigt.

2. Wasserunlöslicher Monoazofarbstoff nach Anspruch 1, worin R $-C_3H_6OCH_3$ ist.

3. Wasserunlöslicher Monoazofarbstoff nach Anspruch 1, worin R $-C_2H_4OC_2H_4OH$ ist.

4. Mischung wasserunlöslicher Monoazofarbstoffe der Formel:

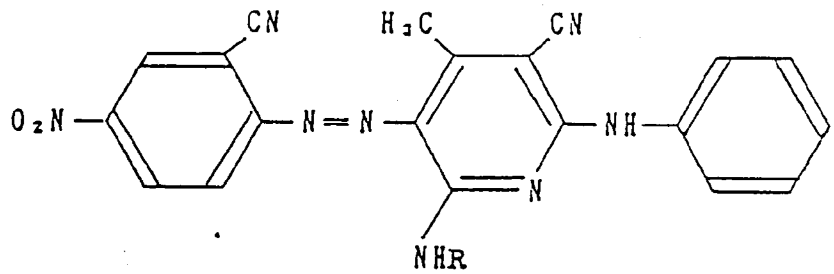

(I)

worin R $-C_3H_6OCH_3$ oder $-C_2H_4OC_2H_4OH$ ist, wobei

(1) wenn R $-C_3H_6OCH_3$ ist, der Farbstoff eine Kristallform hat, die charakterisiert ist durch ein Röntgenbeugungsmuster (CuKα), das den stärksten Peak bei einem Beugungswinkel (2θ) von etwa 6,6° und drei schwache Peaks bei etwa 11,4°, 31,6° und 33,8° zeigt und

(2) wenn R $-C_2H_4OC_2H_4OH$ ist, der Farbstoff eine Kristallform aufweist, die charakterisiert ist durch ein Röntgenbeugungsmuster (CuKα), das drei starke Peaks bei Beugungswinkeln (2θ) von etwa 6,2°, 14,5° und 25,2° sowie zwei mittlere Peaks bei etwa 18,2° und 19,4° zeigt, und

(3) das Mischungsverhältnis des Monoazofarbstoffes der Formel (I), worin R $-C_3H_6OCH_3$ ist, zum Monoazofarbstoff der Formel (I), worin R $-C_2H_4OC_2H_4OH$ ist, bezogen auf das Gewicht, 8:2 bis 2:8 beträgt.

## Revendications

1

1. Colorant monoazoïque insoluble dans l'eau, représenté par la formule :

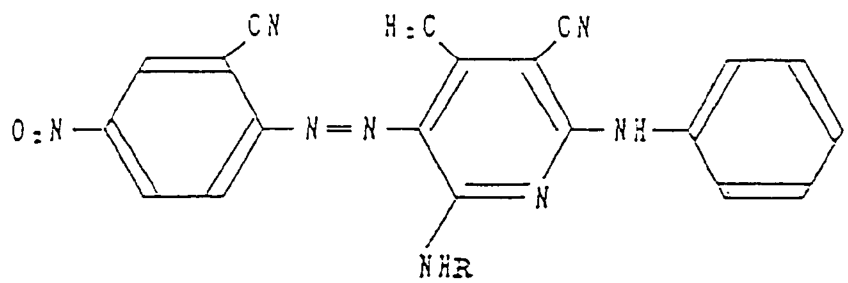

(I)

dans laquelle R représente $-C_3H_6OCH_3$ ou $-C_2H_4OC_2H_4OH$, où

(1) lorsque R représente $-C_3H_6OCH_3$, le colorant présente une transformation cristalline caractérisée par un diagramme de diffraction des rayons X (CuKα) montrant le pic le plus intense à un angle de diffraction (2θ) d'environ 6,6° et trois pics faibles à environ 11,4°, 31,6° et 33,8°, et

(2) lorsque R représente $-C_2H_4OC_2H_4OH$, le colorant a une transformation cristalline caractérisée par un diagramme de diffraction des rayons X (CuKα) montrant trois pics intenses à des angles de diffraction (2θ) d'environ 6,2°, 14,5° et 25,2° et deux pics intermédiaires à environ 18,2° et 19,4°.

2. Colorant monoazoïque insoluble dans l'eau selon la revendication 1, dans lequel R représente $-C_3H_6OCH_3$.

3. Colorant monoazoïque insoluble dans l'eau selon la revendication 1, dans lequel R représente $-C_2H_4OC_2H_4OH$.

4. Mélange de colorants monoazoïques insolubles dans l'eau, représentés par la formule :

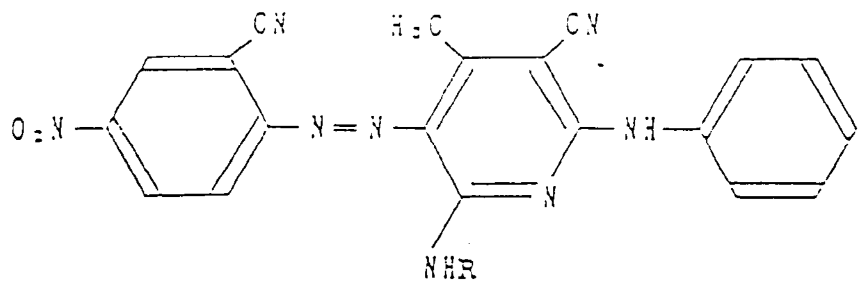
(I)

dans laquelle R représente $-C_3H_6OCH_3$ ou $-C_2H_4OC_2H_4OH$, où

(1) lorsque R représente $-C_3H_6OCH_3$, le colorant a une transformation cristalline caractérisée par un diagramme de diffraction des rayons X (CuKα) montrant le pic le plus intense à un angle de diffraction (2θ) d'environ 6,6° et trois pics faibles à environ 11,4°, 31,6° et 33,8°,

(2) lorsque R représente $-C_2H_4OC_2H_4OH$, le colorant a une transformation cristalline caractérisée par un diagramme de diffraction des rayons X (CuKα) montrant trois pics intenses à des angles de diffraction (2θ) d'environ 6,2°, 14,5° et 25,2° et deux pics intermédiaires à environ 18,2° et 19,4°, et

(3) le rapport de mélange du colorant monoazoïque de formule (I) dans laquelle R représente $-C_3H_6OCH_3$ au colorant monoazoïque de formule (I) dans laquelle R représente $-C_2H_4OC_2H_4OH$ est de 8:2 à 2:8 en rapport en poids.

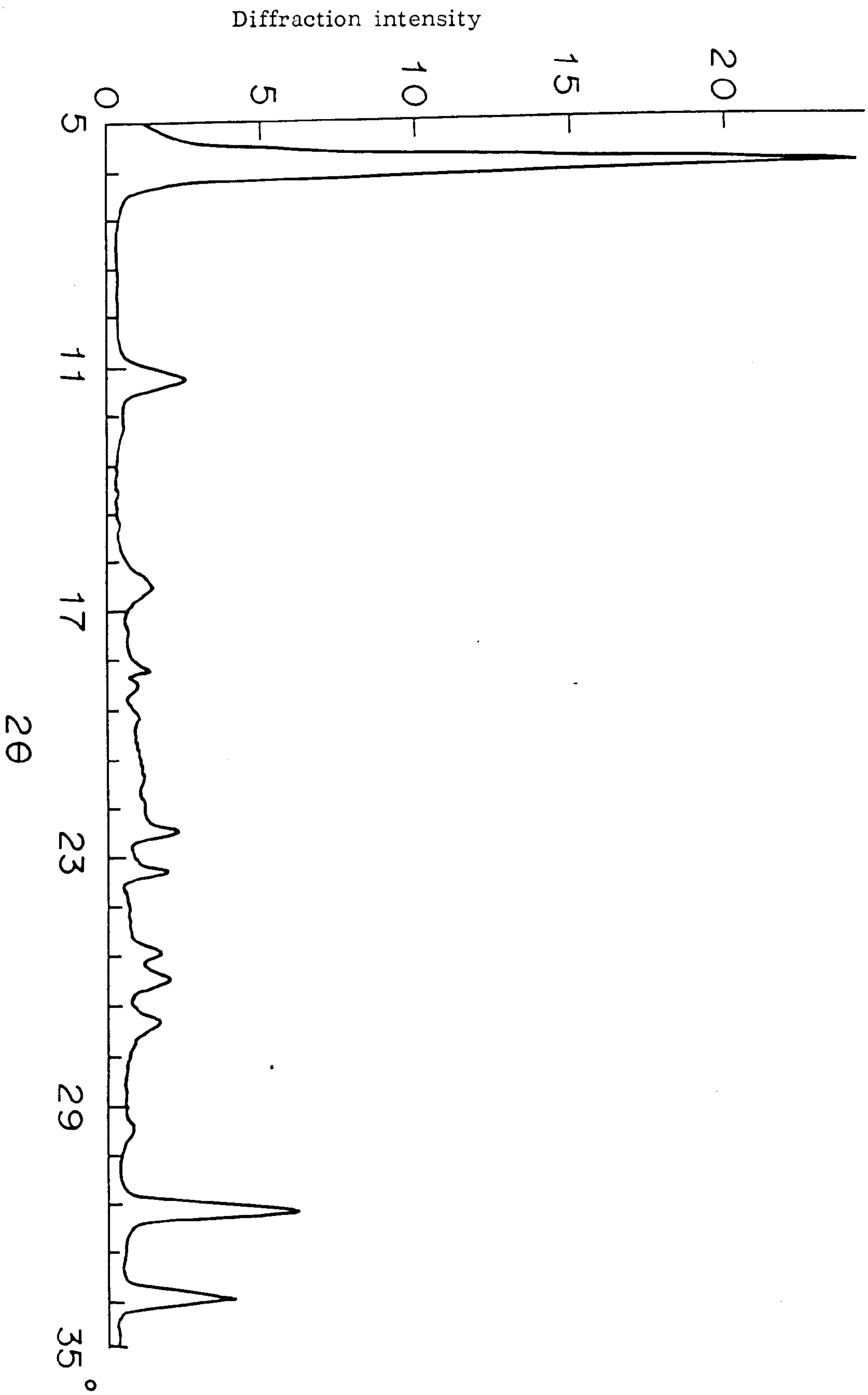


FIGURE I

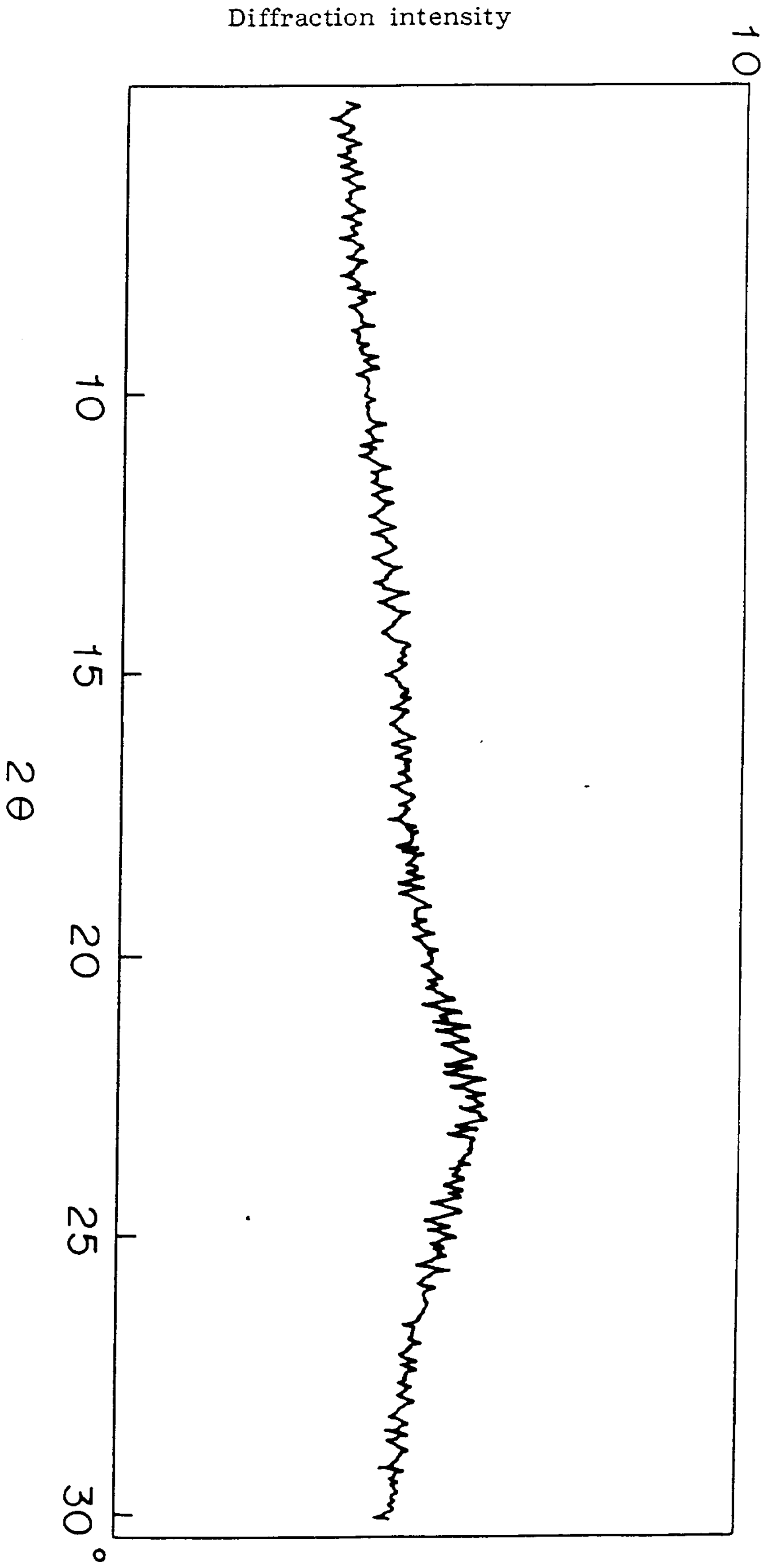


FIGURE 2

FIGURE 3

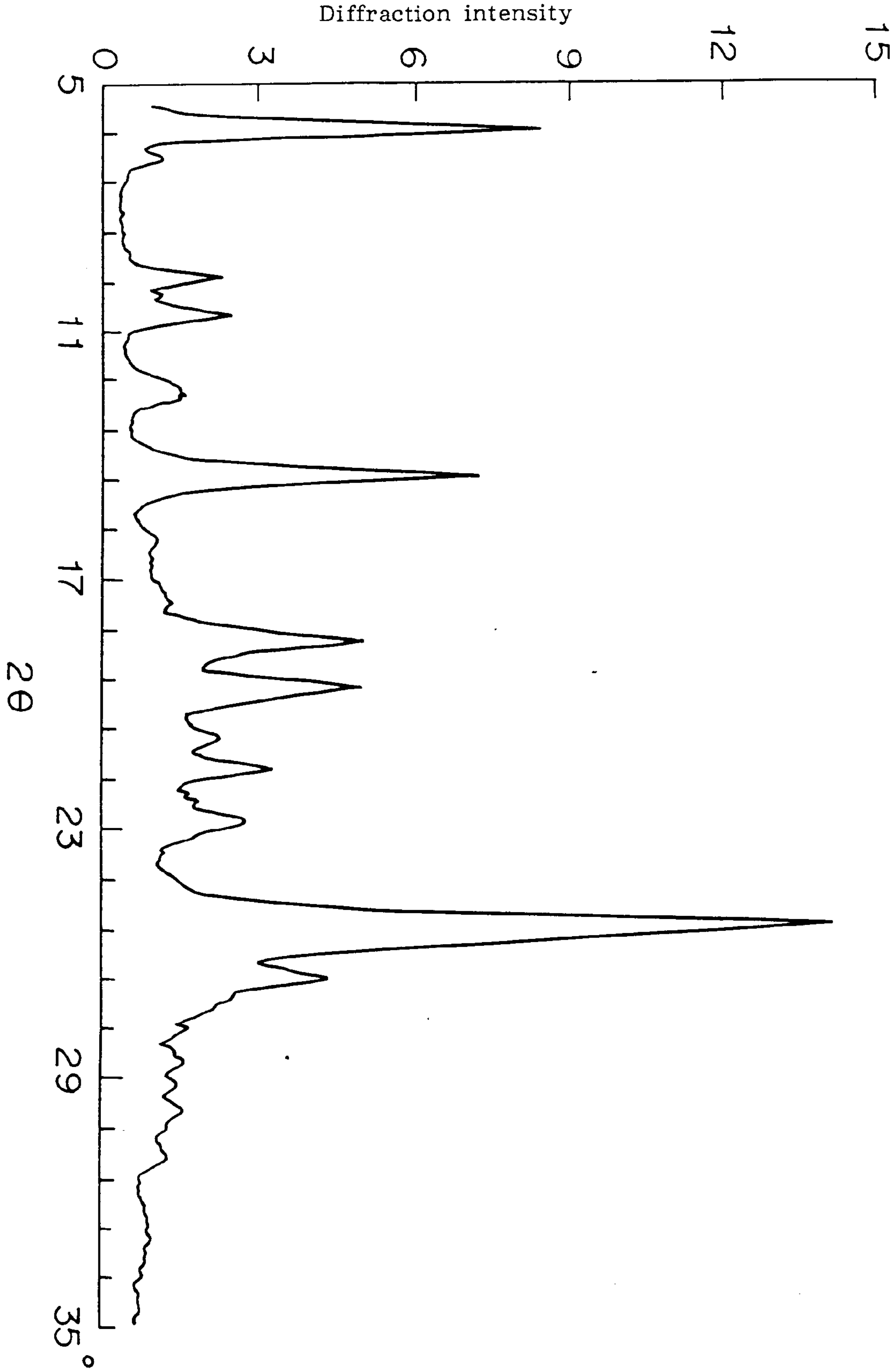

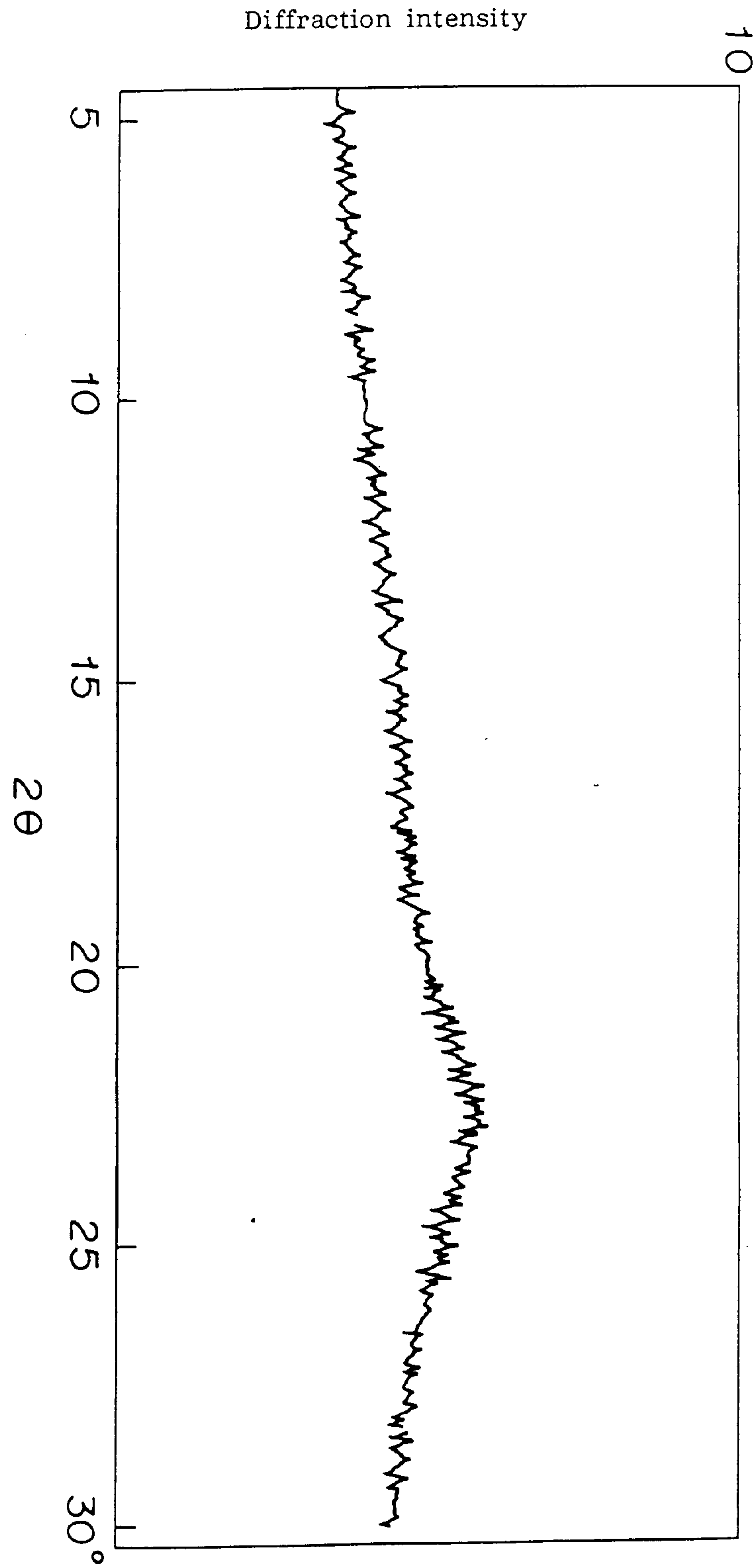


FIGURE 4